**Europäisches Patentamt**

**European Patent Office**

**Office européen des brevets**

(19)

(11) Veröffentlichungsnummer: **0 438 379 A1**

# (12) EUROPÄISCHE PATENTANMELDUNG

(21) Anmeldenummer: 91810012.4

(22) Anmeldetag: 10.01.91

(51) Int. Cl.⁵: **B65G 9/00, B65G 1/04**

(30) Priorität: 18.01.90 DE 4001300

(43) Veröffentlichungstag der Anmeldung:
24.07.91 Patentblatt 91/30

(84) Benannte Vertragsstaaten:
AT BE CH DE DK ES FR GB GR IT LI LU NL SE

(71) Anmelder: JAS AG JET AGE SYSTEMS
Industriestrasse 14
CH-8302 Kloten (CH)

(72) Erfinder: Mischler, Ernst
Chränzlerstrasse 5
CH-8302 Kloten (CH)

(74) Vertreter: Rottmann, Maximilian R.
c/o Rottmann, Zimmermann + Partner AG
Glattalstrasse 37
CH-8052 Zürich (CH)

(54) Hängefördereinrichtung mit einer Anzahl von in parallelen Reihen angeordneten Lager- oder Transportstrassen.

(57) Die Hängefördereinrichtung weist zum Versetzen von Transporteinheiten (2) von einer Lagerstrasse (1) in eine parallele Lagerstrasse eine Übergabevorrichtung (4) auf. Diese ist im Mündungsbereich der Lagerstrassen (1) senkrecht zu diesen auf Schienen (3) bewegbar. Zur Aufnahme der Transporteinheiten ist die Übernahmevorrichtung (4) mit einem Aufnahmeorgan (7) versehen, welches in der arretierten Stellung der Übergabevorrichtung (4) in Richtung der parallelen Lagerstrassen (1) seitlich verschiebbar ist. In der verschobenen Lage kann die Übergabevorrichtung an eine benachbarte Lagerstrasse (1) angedockt werden, so dass eine Transporteinheit aufgenommen, bzw. ausgeladen werden kann.

EP 0 438 379 A1

FIG.1

# HÄNGEFÖRDEREINRICHTUNG MIT EINER ANZAHL VON IN PARALLELEN REIHEN ANGEORDNETEN LAGER- ODER TRANSPORTSTRASSEN

Die vorliegende Erfindung bezieht sich auf eine Hängefördereinrichtung mit einer Anzahl von in einer gemeinsamen Ebene und in parallelen Reihen angeordneten, als Einschinenbahn ausgebildeten Lager- oder Transportstrassen, in welchen Transporteinheiten hin- und herbeweglich sind.

Es sind Fördereinrichtungen bekannt, bei denen die Lager- oder Transportstrassen in vielen Fällen mit Schienenfahrbahnen ausgerüstet sind, auf welchen die Transporteinheiten in der Form von Transportwagen verfahrbar sind. Auf diese Weise können Güter einfach und platzsparend von einem Arbeitsplatz zu einem anderen bzw. von einem Arbeitsplatz in ein Zwischen- oder Endlager resp. vom Zwischenlager zurück an den Arbeitsplatz verschoben werden. Dabei findet oft eine Ausführung Verwendung, bei welcher das Transportieren der Güter auf einer solchen Einschienenfahrbahn erfolgt, die gegenüber einer Arbeitsebene erhöht in einer Transportebene verfahrbar ist. Bei der Ausbildung der Anlage als Lager finden eine grössere Anzahl parallel zueinander verlaufender Lagerstrassen Verwendung, welche meistens je eine Einschienenfahrbahn aufweisen, auf welchen die Laufwagen verkehren. Bei solchen Lagerstrassen ist das Versetzen von Transporteinheiten von einer Lagerstrasse in eine andere parallel verlaufende Lagerstrasse mit grossen Schierigkeiten verbunden, insbesondere dann, wenn das Versetzen rasch, einfach oder sogar automatisiert erfolgen sollte.

Zweck der Erfindung ist die Behebung dieser Schwierigkeiten und Nachteile.

Gemäss der Erfindung wird eine Hängefördereinrichtung mit einer Anzahl von in einer gemeinsamen Ebene und in parallelen Reihen angordneten, als Einschienenbahn ausgebildeten Lager- oder Transportstrassen vorgeschlagen, in welchen Transporteinheiten hin- und herbeweglich sind, und bei welcher zum Versetzen von Transporteinheiten von einer Lagerstrasse in eine parallel dazu verlaufende Lagerstrasse eine Übergabevorrichtung mit einem Aufnahmeorgan vorhanden ist, wie dies im kennzeichnenden Teil des Anspruchs 1 beschrieben ist.

Bei einer solchen Hängefördereinrichtung ist es zweckmässig, die Übergabevorrichtung in einem Unterbruch der Lagerstrassen senkrecht zu diesen bewegbar und das Aufnahmeorgan senkrecht zur Bewegungsrichtung der Übergabevorrichtung beidseitig des Unterbruchs verschiebbar auszubilden.

Eine zweckmässige und sehr praktische Ausführung der Hängefördereinrichtung ist in Anspruch 3 definiert.

Weitere Merkmale von vorteilhaften Ausführungen ergeben sich aus den Ansprüchen 4 bis 12.

In einer praktischen Ausführung weist die Hängefördereinrichtung eine gegenüber der Arbeitsebene erhöht in einer Transportebene, insbesondere im Bereich der Decke angeordnete Einschienenfahrbahn auf, auf welcher die Transporteinheiten in Form von Laufwagen bewegbar sind. Zu diesem Zwecke sind sie mit sich auf der Einschienenfahrbahn abwälzenden Rollen ausgerüstet. Zur Verschiebung der Laufwagen können Förderorgane vorhanden sein.

Vielfach sind die Laufwagen als einfache stangenartige Elemente ausgebildet und mit Rollen ausgerüstst, wobei die Laufwagenelemente mit Lastaufnehmerorganen in Form von Körben, Plattformen usw. versehen sind. In dieser Weise kann ein einfacher, platzsparender und zuverlässiger Transport der Güter von einem Arbeitspatz in ein Zwischen- oder Endlager und zurück erreicht werden.

Im folgenden wird ein Ausführungsbeispiel einer erfindungsgemässen Förderanlage anhand der beiliegenden Zeichnungen näher beschrieben. In der Zeichnung zeigen :

Fig. 1 eine schematische Gesamtdarstellung einer beispielsweisen Hängefördereinrichtung im Grundriss ;

Fig. 2 eine schematisch Darstellung der gleichen Hängefördereinrichtung im Vertikalschnitt ;

Fig. 3 eine Stirnansicht des Aufnahmeorgans in vergrösserter Darstellung ; und

Fig. 4 die Ausbildung eines Aufnahmeorgans im Grundriss.

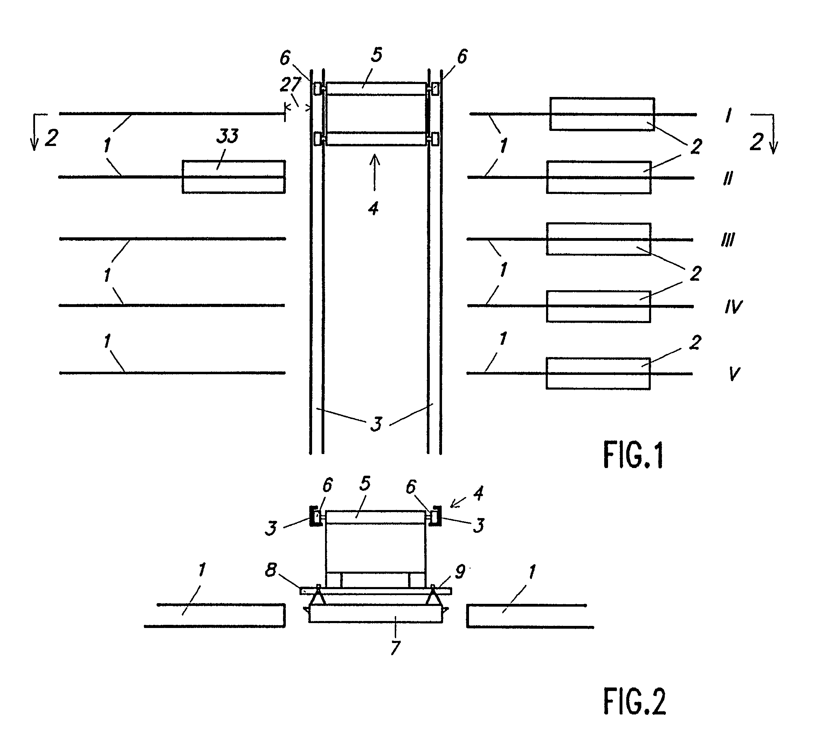

In Fig. 1 ist eine Hängefördereinrichtung schematisch im Grundriss dargestellt. Die Hängefördereinrichtung weist eine Anzahl in einer gemeinsamen, horizontalen Ebene in parallelen Reihen angeordneter Lager- und Transportstrassen auf, an welchen, in dieser Figur nur rein schematisch gezeichnete, Transporteinheiten 2 beweglich angeordnet sind. Gemäss der Darstellung sind fünf Lager- und Transportstrassen 1 vorhanden, welche mit I - V bezeichnet sind. Wie ferner aus dieser Figur ersichtlich ist, sind die Lager- und Transportstrassen 1 an der gleichen Stelle unterbrochen, wobei an der Unterbruchstelle, senkrecht zu den Lager- und Transportstrassen 1 verlaufend, ein Schienenpaar 3 angeordnet ist, auf welchem eine Übergabevorrichtung 4 hin- und herbewegt werden kann.

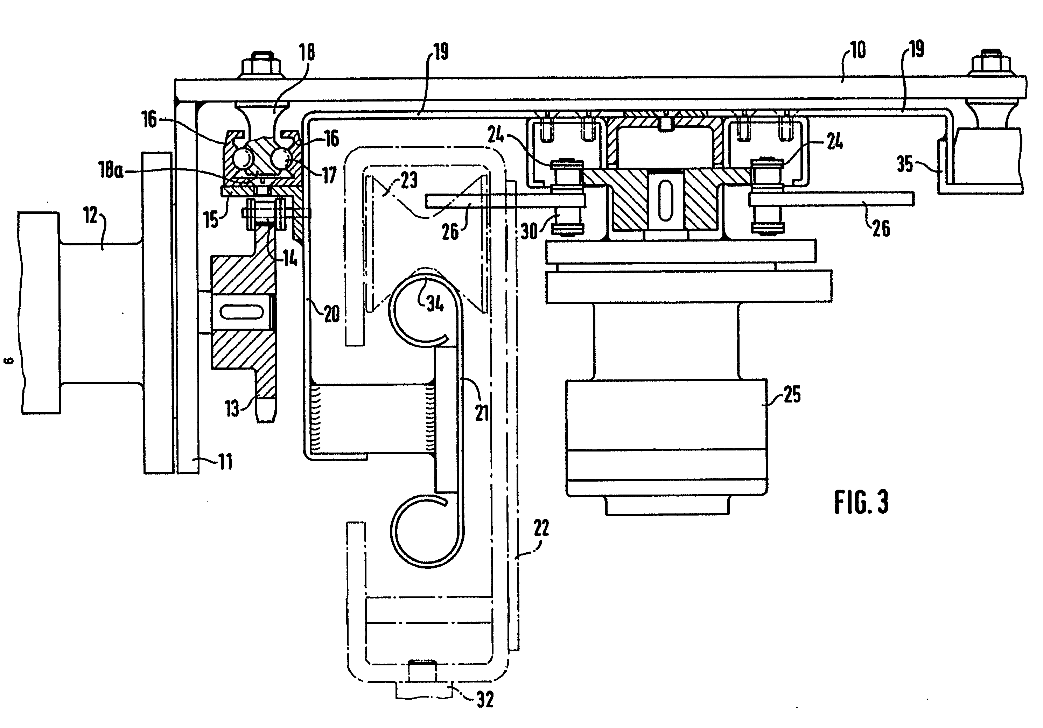

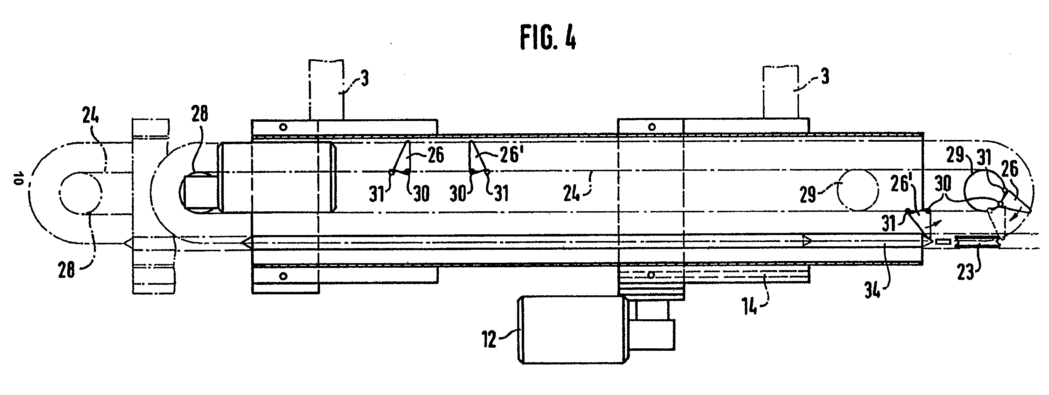

Die Übergabevorrichtung weist ein Fahrgestell 5 auf, welches mit vier Rädern 6 versehen ist, die paarweise auf den Schienen 3 geführt sind. Die Schienen 3 sind oberhalb der Ebene der Lager- und Transportstrasse 1 angeordnet, und zwar in einer Höhe, dass ein am Fahrgestell 5 der Übernahmevorrichtung 4 befestigtes Aufnahmeorgan 7 in der Ebene der Lager- und Transportstrasse 1 zu liegen kommt. Dieses Aufnahmeorgan 7 ist auf einem am Fahrgestell 5 befestigten, schienenartigen Träger 8 mittels Rollen 9 horizontal verschiebbar angeordnet. Die Anordnung ist dabei so getroffen, dass das Aufnahmeorgan 7 wahlweise nach links oder nach rechts so verschoben werden kann, dass es an die entsprechende linke oder rechte Lager- oder Transportstrasse 1 angeschlossen wird. Eine mögliche praktische Ausbildung einer solchen Übernahmevorrichtung 4 geht aus den Fig. 3 und 4 hervor.

In Fig. 3 ist das Fahrgestell 5 selbst nicht gezeigt, sondern nur eine, einen Teil des Fahrgestells 5 bildende oder an diesem befestigte Platte 10, welche eine seitliche, sich senkrecht nach unten erstreckende Seitenwand 11 besitzt. Entlang der Platte 10 ist das in Fig. 2 mit 7 bezeichnete Aufnahmeorgan in der zur Zeichnungsebene senkrechten Richtung verschiebbar angeordnet. Das Aufnahmeorgan 7 besitzt in Fig. 3 einen plattenförmigen Träger 19, welcher sich parallel zur festen Platte 10 erstreckt und eine abgewinkelte Seitenwand 20 besitzt. Die verschiebbare Befestigung der Trägers 19 samt Seitenwand 20 an der Platte 10 erfolgt durch zwei Profilstangen 18, die im Abstand voneinander an der Platte 10 fest verankert sind, sowie durch entsprechende, den Profilkopf 18a der Profilstangen 18 umgreifende Führungen 16, welche mit Kugeln 17 ausgerüstet sind. Die Führungen 16 sind im Querschnitt annähernd U-förmig ausgebildet und mit Hilfe von L-förmigen Halteorganen 35 am Träger 18 bzw. an der Seitenwand 20 befestigt.

An der Seitenwand 11 der Tragplatte 10 ist ein Elektromotor 12 festgemacht, welcher mit einem Zahnrad 13 ausgerüstet ist, das seinerseits mit einer Zahnstange kämmt, die im Halteorgan 35 befestigt ist. In dieser Weise wird erreicht, dass durch den Antrieb des Zahnrads 13 die Zahnstange 14 und damit der Träger 19 mit sämtlichen daran angeordneten Teilen mit Hilfe der Führung 16 und Profilstange 18 senkrecht zur Zeichnungsebene hinund herverschoben werden kann.

An der abgewinkelten Seitenwand 20 des Trägers 19 ist ferner eine Tragschiene 21 einer Einschienenbahn mit Schienenprofil 34 festgemacht, welche Einschienenbahn zum Verfahren von entsprechenden Transporteinheiten 2 dient. Eine geeignete Transporteinheit weist zwei im Abstand voneinander angeordnete Bügel 22 auf, die mit je einer Transportrolle 23 ausgerüstet sind, die auf dem Schienenprofil 34 der Tragschiene 21 geführt sind. Die beiden Bügel 22 sind durch eine Tragstange 32 miteinander verbunden und bilden so eine Transporteinheit, welche allgemein mit 2 bezeichnet wurde. Es könnten aber im Rahmen der Erfindung auch andere Transporteinheiten verwendet werden, die auf einer Schiene oder auf einer geeigneten Unterlage verfahrbar sind.

Zum Bewegen der Transporteinheiten in die und aus der sowie innerhalb der beschriebenen Übergabevorrichtung ist eine endlose Kette 24 vorhanden, welche über ein Umlenkrad und über ein Antriebsrad (in Fig. 3 nicht ersichtlich) senkrecht zur Zeichnungsebene in einseitig offenen Führungskanälen 36 geführt ist. Die Kette 24 wird mit Hilfe eines Antriebsmotors 25 bewegt, welcher das Antriebsrad der endlosen Kette 24 antreibt. Ferner sind an der Kette 24 dreieckförmige und in einer Richtung schwenkbare Mitnehmer 26 angeordnet, deren Ausbildung und Wirkungsweise später näher erläutert wird.

Wie sich aus den vorangehenden Ansführungen ergibt, ist die Platte 10 zusammen mit dem Fahrgestell 5 entlang von den Schienen 3 entsprechenden Führungen in der Zeichnungsebene (Fig. 1 und 3) verschiebbar. Durch eine solche Verschiebung wird erreicht, dass die Tragschiene 21 mit einer der Lager- und Transportstrassen 1 in Übereinstimmung gebracht und dort arretiert wird. Es verbleibt jedoch immer ein Abstand 27 (Fig. 1) zwischen dem Ende der Tragschiene 21 und dem zugekehrten Ende der entsprechenden Lager- und Transportstrasse 1, welche selbstverständlich genau gleich geformt und ausgebildet ist wie die Tragschiene 21. Damit eine Transporteinheit 2 von einer Lager- und Transportstrasse 1 auf die korrespondierende Tragschiene 21 überführt werden kann, ist es erforderlich, dass der erwähnte Abstand 27 überbrückt wird. Zu diesem Zweck wird das in Fig. 2 allgemein mit 7 bezeichnete Aufnahmeorgan je nach Erfordernis soweit nach liks oder nach rechts verschoben, bis der Abstand 27 überbrückt ist, so dass zwischen dem Ende der Lager- und Transportstrasse 1 und dem zugekehrten Ende der Tragschiene 21 eine zusammenhängende Bahn entsteht.

In Fig. 3 entsprechen die Teile 14 - 17 und 19 - 21 dem Aufnahmeorgan 7 und sind, wie beschrieben, senkrecht zur Zeichnungsebene (Fig. 2 und 3) verschiebbar. Zum Verschieben dient die Zahnstange 14, welche durch den Motor 12 und das Zahnrad 13, welche Teile fest am Fahrgestell 5 angeordnet sind, hinund herbewegt werden kann. Je nach Drehrichtung des Motors 12 wird in dieser Weise das Aufnahmeorgan 7 (Fig. 2) nach rechts oder nach links so verschoben, dass der Anschluss an die entsprechende Lager- und Transportstrasse hergestellt wird.

Ein Grundriss der beschriebenen Hängefördereinrichtung ist aus Fig. 4 ersichtlich. Die beiden Platten 10 sind, wie beschrieben, am Fahrgestell 5 angeordnet, welches Fahrgestell 5 in dieser Fig. 4 nicht dargestellt ist. Erkennbar ist die endlose Kette 24, welche über das Kettenrad, bzw. das Umlenkrad 28 und 29 geführt ist. Der Antrieb des Kettenrades 28 erfolgt mit Hilfe des Motors 25, wie dies bereits erwähnt wurde.

Die endlose Kette 24 ist mit paarweise angeordneten Mitnehmern 26 ausgerüstet, wobei jeder Mitnehmer dreieckförmig gestaltet und um je eine vertikale Achse 30 schwenkbar angeordnet ist. Eine solche vertikale Achse 30 ist in Fig. 4 schematisch und in Fig. 3 mehr ausführlich dargestellt. Mit 31 sind Anschläge bezeichnet, die so angeordnet sind, dass ein Mitnehmer aus der Ruhestellung nur im Uhrzeigersinne und der zugeordnete Mitnehmer ebenfalls aus der Ruhestellung nur im Gegenuhrzeigersinne schwenkbar ist. Ferner steht jeder Mitnehmer 26 und 26′ unter Einfluss einer Spiralfeder (nicht ersichtlich), welche bestrebt ist, den Mitnehmer gegen den zugeordneten Anschlag zu schwenken. Der Abstand von zwei zusammengehörigen Mitnehmern 26 und 26′ ist so bemessen, dass zwischen den beiden Teilen eine Tragrolle 23 einer Transporteinheit Platz hat.

Zur näheren Erklärung der Wirkungsweise der beschriebenen Hängefördereinrichtung wird angenommen, dass eine Transporteinheit 33 aus der Reihe II der Lager- und Transportstrasse 1 in die Reihe IV (Fig. 1) gefördert werden muss. Die Anordnung ist dabei zweckmässigerweise so getroffen, dass sämtliche Lager- und Transportstrassen, d.h. sowohl diejenigen auf der rechten wie auch diejenigen auf der linken Seite des Schienenpaars 3, gegen das Schienenpaar 3 ein leichtes Gefälle aufweisen. Am Ende der einzelnen Lager- und Transportstrassen ist, in an und für sich bekannter Weise, je ein Arretieranschlag vorhanden, der ein- und ausgeschaltet werden kann. Die fragliche Transporteinheit rollt also auf der leicht abfallenden Lager- und Transportstrasse gegen den am Ende der Lager- und Transportstrasse angeordneten, geschlossenen Arretieranschlag und wird dort aufgehalten. Zum Übernehmen und Wegtransportieren dieser Transporteinheit 33 aus der Reihe II wird die Übergabevorrichtung 4 so verfahren, dass die Tragschiene 21 derselben direkt vor der entsprechenden Schiene der jetzt als Einschienenfahrbahn ausgebildeten Lager- und Transportstrasse 1 in der Reihe II zu stehen kommt. Praktisch kann aber die Überführung der Transporteinheit 33 auf die Übergabevorrichtung 4 nicht stattfinden, da zwischen dem zugekehrten Ende der Schiene 21 und dem entsprechenden Ende der Einschienenfahrbahn der Lager- und Transportstrasse 1 noch eine Lücke (Abstand 27) besteht und die Transporteinheit 33 durch den Arretieranschlag am Weiterrollen gehindert ist.

Zum Schliessen der Lücke (Abstand 27) wird mit Hilfe des Motors 12, welcher in Drehung versetzt wird, das Zahnrad 13 ebenfalls in langsame Drehung versetzt, wodurch die in das Zahnrad 13 eingreifende Zahnstange 14 samt Träger 19 in Fig. 1 nach links verschoben wird. Durch diese Verschiebung wird das Schienenprofil 34 mit dem entsprechenden Profil der Einschienenfahrbahn der Lager- und Transportstrasse 1 in direkte Verbindung gebracht, d.h. das Aufnahmeorgan 7 wurde an die entsprechende Lager- und Transportstrasse 1 angedockt. Gleichzeitig wird eine in der Zeichnung nicht näher dargestellte und zum Stand der Technik gehörende Lichtschranke unterbrochen, welche dadurch den Arretieranschlag löst, so dass die Transporteinheit 33 weiterrollen kann.

Zusammen mit der Tragschiene 21 wurde auch der ganze Träger 19 samt endloser Kette 24 in die Ausstoss- oder Andocklage gebracht, wie dies insbesondere aus Fig. 4 (rechte Seite) hervorgeht. Hier ist weiter ersichtlich, dass sich die vordere Rolle 23 einer Transporteinheit vom Mitnehmer 26′ übergangen wurde, da dieser beim Auftreffen auf die Rolle 23 durch diese Rolle 23 entgegen der Federwirkung im Gegenuhrzeigersinne verschwenkt wurde. Anschliessend kehrte dieser Mitnehmer 26 unter Federwirkung wieder in die dargestellte Stellung zurück. Der nachfolgende Mitnehmer 26 dagegen, welcher nur im Uhrzeigersinne schwenkbar ist, hintergreift die Rolle 23 und schiebt dieselbe auf das Schienenprofil 34 der Tragschiene 21. Diese Rolle befindet sich jetzt zwischen den beiden Mitnehmern 26′ und 26 und wird weitertransportiert, bis die hintere Rolle 33 der gleichen Transporteinheit sich ebenfalls auf dem Schienenprofil 34 der Tragschiene 21 befindet. Anschliessend wird der Antriebsmotor 25 zum Bewegen der endlosen Kette 24 abgestellt, die Übergabevorrichtung 4 aus der Andocklage zurückgezogen und auf den Schienen 3 bis zu derjenigen Lager- und Transportstrasse 1 verfahren, wo die Transporteinheit abzustellen ist. An dieser Stelle wird der Träger 19 mit allen daran befestigten Teilen durch die Betätigung des in die Zahnstange 14 greifenden Zahnrades 13 ausgestossen, bis das Schienenprofil 34 der Tragschiene 21 an die entsprechende Lager- und Transportstrasse 1 angeschlossen ist. Zum Ausladen der Transporteinheit wird wieder die endlose Kette 24 betätigt, wobei der vor der Rolle 33 stehende Mitnehmer aus der Bewegungsbahn der Rolle weggeschwenkt und der sich nach der Rolle befindende Mitnehmer die Rolle auf die angeschlossene Lager- und Transportstrasse 1 fördern wird.

In der beschriebenen Weise ist es möglich, eine Transporteinheit von einer Lager- und Transportstrasse zu übernehmen und in eine parallele Strasse umzuladen, gleichgültig, ob die Strasse auf der gleichen oder auf der anderen Seite der Übergabevorrichtung liegt. Darüberhinaus ist es auch möglich, eine ähnlich funktionierende Hängefördereinrichtung zum Vertikaltransport zu verwenden. In diesem Falle liegen die Lager- und Transportstrassen untereinander in einer vertikalen Ebene und dementsprechend wird das Schienenpaar 3 vertikal geführt. Auch in diesem Falle arbeitet die Hängefördereinrichtung schnell und zuverlässig.

Eine Weiterentwicklung der beschriebenen Hängefördereinrichtung besteht darin, dass diese mit Hilfe einer zentralen Steuereinheit betätigt wird, welche eingehende und an eine Lagerstelle zu bewegende Transporteinheiten registriert, die entsprechenden Befehle zum Bewegen der Übergabevorrichtung erteilt, welche dann das Andocken, Einladen und Weitertransportieren sowie schliesslich das Ausladen der entsprechenden Transporteinheiten nach einem Programm automatisch durchführt.

Durch die Verwendung der beschriebenen Mitnehmerpaare 26, 26' wird verhindert, dass eine sich auf der Übergabevorrichtung befindliche Transporteinheit aus irgendeinem Grunde ungewollt wegrollt, was zu schweren Schäden und zu Unfällen führen könnte. Eine zwischen zwei der beschriebenen Mitnehmern 26, 26' befindliche Rolle ist bei stehender Kette 24 blockiert festgehalten, da keiner der Mitnehmer 26 oder 26' durch die Rolle verschwenkt werden kann. Erst durch die Bewegung der endlosen Kette wird einer der Mitnehmer, und zwar der in der Bewegungsrichtung vorne liegende Mitnehmer, aus der Bewegungsbahn der Rolle verschwenkt, wodurch der Weg derselben freigegeben wird.

Die beschriebene Hängefördereinrichtung ist sehr einfach aufgebaut und funktioniert unter allen Umständen zuverlässig.

**Patentansprüche**

1. Hängefördereinrichtung mit einer Anzahl von in einer gemeinsamen Ebene und in parallelen Reihen angeordneten, als Einschienenbahn ausgebildeten Lager- oder Transportstrassen, in welchen Transporteinheiten hin- und herbeweglich sind, **dadurch gekennzeichnet,** dass zum Versetzen einer Transporteinheit (2) von einer Lagerstrasse (1) in eine parallel dazu verlaufende Lagerstrasse eine Übergabevorrichtung (4) senkrecht zu den Lagerstrassen (1) vor diesen bewegbar und vor der Mündungsstelle einer jeden Lagerstrasse arretierbar angeordnet und mit einem Aufnahmeorgan (7) für eine Transporteinheit (2) ausgerüstet ist, welches in der arretierten Stellung der Übergabevorrichtung (4) in der Richtung der parallelen Lagerstrassen (1) verschiebbar ist.

2. Hängefördereinrichtung nach Anspruch 1, **dadurch gekennzeichnet,** dass die Übergabevorrichtung (4) in einem Unterbruch der Lagerstrassen (1) senkrecht zu diesen bewegbar und das Aufnahmeorgan (7) senkrecht zur Bewegungsrichtung der Übergabevorrichtung (4) wahlweise beidseitig des Unterbruchs verschiebbar ausgebildet ist.

3. Hängefördereinrichtung nach den Ansprüchen 1 und 2, **dadurch gekennzeichnet,** dass jede Lagerstrasse (1) mit einer Fahrbahn versehen ist, auf welchen Transporteinheiten (2) in der Form von Laufwagen verschiebbar sind, und die Übergabevorrichtung (4) entlang einer Schienenfahrbahn (3) beweglich ist, welche sich im Bereiche der Mündungen der Lager- und Transportstrassen (1) senkrecht zu diesen erstreckt.

4. Hängefördereinrichtung nach den Ansprüchen 1 - 3, **dadurch gekennzeichnet,** dass die Übergabevorrichtung (4) ein Fahrgestell (5) aufweist, auf welchem das Aufnahmeorgan (7) quer zur Bewegungsrichtung der Übergabevorrichtung (4) verschiebbar geführt ist.

5. Hängefördereinrichtung nach Anspruch 4, **dadurch gekennzeichnet,** dass das Aufnahmeorgan (7) eine, auf einem Träger (19) angeordnete Tragschiene (21) zur verschiebbaren Aufnahme von Tranporteinheiten (2) besitzt, welcher Träger (19) mittels Kugelführungen (16, 17) auf Profilstangen (18) des Fahrgestells (5) verschiebbar angeordnet ist.

6. Hängefördereinrichtung nach Anspruch 5, **dadurch gekennzeichnet,** dass zum Verschieben des Aufnahmeorgans (7) dasselbe eine Zahnstange (14) besitzt, mit welcher ein Zahnrad (13) eines Elektroantriebs (12) zusammenwirkt, der auf einer Seitenwand (11) einer Platte (10) des Fahrgestells (5) befestigt ist.

7. Hängefördereinrichtung nach mindestens einem der vorangehenden Ansprüche, **dadurch gekennzeichnet,** dass das Aufnahmeorgan (7) eine Kettentransporteinrichtung aufweist, welche eine endlose Kette (24) umfasst, die quer zur Bewegungsrichtung der Übergabevorrichtung (4) über ein angetriebenes Kettenrad (28) und Umlenkrad (29) verläuft und mit Mitnehmern (26, 26') ausgerüstet ist.

8. Hängefördereinrichtung nach Anspruch 7, **dadurch gekennzeichnet,** dass die Mitnehmer (26, 26') sich in der Ebene der endlosen Kette (24) erstrecken und um eine senkrecht zu dieser Ebene gerichtete Achse (30) von einer Wirkstellung aus nur in einer Richtung schwenkbar gelagert sind.

9. Hängefördereinrichtung nach Anspruch 8, **dadurch gekennzeichnet,** dass zwei zusammenwirkende Mitnehmer (26, 26') so angeordnet sind, dass der eine Mitnehmer aus seiner Wirkstellung nur im Uhrzeigersinne und der andere Mitnehmer aus seiner Wirkstellung nur im Gegenuhrzeigersinne verschwenkbar ist.

10. Hängefördereinrichtung nach Anspruch 9, **dadurch gekennzeichnet,**
dass im Schwenkbereiche jedes Mitnehmers ein Anschlag (31) vorhanden ist, welcher die Schwenkbewegung des Mitnehmers von der Wirkstellung ausgehend, nur in einer Richtung erlaubt.

11. Hängefördereinrichtung nach Anspruch 10, **dadurch gekennzeichnet,** dass jeder Mitnehmer dreieckförmig ausgebildet ist und in einer Ecke des Dreiecks schwenkbar an der endlosen Kette (24) befestigt ist.

12. Hängefördereinrichtung nach Anspruch 11, **dadurch gekennzeichnet,** dass jeder Mitnehmer in einer parallel zur Ebene der endlosen Kette (24) liegenden Ebene schwenkbar ist und in der Wirkstellung,in die Bewegungsbahn der Transporteinheiten greift.

FIG.1

FIG.2

EP 0 438 379 A1

FIG. 3

# FIG. 4

EP 0 438 379 A1

**Europäisches Patentamt**

## EUROPÄISCHER RECHERCHENBERICHT

Nummer der Anmeldung

| EINSCHLÄGIGE DOKUMENTE | | EP 91810012.4 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | FR - A - 1 579 470 (POCLAIN) * Anspruch 2; Fig. 1 * -- | 1 | B 65 G 9/00 B 65 G 1/04 |
| A | EP - A1 - 0 344 804 (VEIT TRANSPO) * Fig. 1,2 * -- | 1 | |
| A | US - A - 4 858 746 (ITO) * Fig. 11 * -- | 1 | |
| A | DE - A1 - 3 130 024 (HEPTNER) * Fig. 1 * ---- | 1 | |

| | RECHERCHIERTE SACHGEBIETE (Int Cl⁵) |
|---|---|
| | B 65 G |

Der vorliegende Recherchenbericht wurde für alle Patentansprüche erstellt.

| Recherchenort | Abschlußdatum der Recherche | Prüfer |
|---|---|---|
| WIEN | 28-03-1991 | BAUMGARTNER |